# EUROPÄISCHE PATENTSCHRIFT

(11) **EP 2 875 928 B1**
(45) Veröffentlichungstag und Bekanntmachung des Hinweises auf die Patenterteilung: **03.01.2018**
(21) Anmeldenummer: 14159515.7
(22) Anmeldetag: 13.03.2014
(51) Int. Cl.: B29C 44/58, B29C 44/34, B29C 67/00, B22F 3/105

(54) **Verfahren zur Herstellung eines Formwerkzeugs**
Method of manufacturing a mould tool
Procédé de fabrication d'un outil de formage

(30) Priorität: 25.11.2013 DE 102013112987
(43) Veröffentlichungstag der Anmeldung: 27.05.2015
(73) Patentinhaber: Overath GmbH, 53797 Lohmar (DE)
(72) Erfinder: Overath, Udo, 53797 Lohmar (DE); Lang, Eberhard, 74080 Heilbronn (DE)
(74) Vertreter: Wagner Albiger & Partner Patentanwälte mbB

(56) Entgegenhaltungen:
- EP-A1- 1 923 193
- WO-A1-2004/004955
- WO-A1-2012/100779
- DE-A1- 10 025 804
- DE-A1- 19 744 165
- GB-A- 2 485 848

## Beschreibung

Die vorliegende Erfindung betrifft ein Formwerkzeug zum Formen von Formschaumteilen aus thermoplastischen Schaumstoffpartikeln. Solche Formschaumteile aus thermoplastischen Schaumstoffpartikeln, wie zum Beispiel aus expandiertem Polystyrol (EPS), expandiertem Polypropylen (EPP) oder expandiertem Polyethylen (EPE), weisen ein relativ geringes Gewicht, eine hohe Festigkeit und gute Isoliereigenschaften auf. Formschaumteile aus solchen thermoplastischen Schaumstoffpartikeln werden daher weltweit für verschiedenste Anwendungen in den Bereichen Isolierung, Verpackung, Transport, Lebensmittel- und Automobilindustrie eingesetzt.

Solche Formschaumteile werden mit sogenannten Formteilautomaten verarbeitet, die, vereinfacht dargestellt, eine hydraulische Presse mit einem Zuhaltemechanismus für das Formwerkzeug und eine Zuführung und Regelung der benötigten Medien (Rohstoff, Wasser, Vakuum, Dampf und Druckluft) aufweisen. Das Formwerkzeug ist herkömmlicherweise eine zweiteilige Aluminiumform und besteht im Wesentlichen aus zwei Formwerkzeugteilen bzw. Formwerkzeughälften, die einen Formhohlraum (eine sogenannte Kavität) bilden.

Der Prozess zum Formen des Formschaumteils findet im Wesentlichen im Formwerkzeug statt. Hierbei werden zunächst die Schaumstoffpartikel mittels Druckluft und Vakuum in die Kavität befördert. Sodann wird Heißdampf unter Druck zunächst in eine dem Formwerkzeug vorgesetzte Dampfkammer eingeleitet. Dabei kondensiert der Dampf teilweise auf der Rückseite des Formwerkzeugs und erwärmt diese. Gleichzeitig strömt ein weiterer Teil des Dampfes durch eine im Formwerkzeug befindliche Verdüsung und leitet den Prozess der Verschweißung der Schaumstoffpartikel ein. Der heiße Dampf erhitzt die Oberflächen der thermoplastischen Schaumstoffpartikel soweit, dass diese schmelzen und es nach Einbringung eines gewissen Drucks zu einer Verbindung der Schaumstoffpartikel zum Formschaumteil kommt. Die Dampfkammer und das Formwerkzeug werden mit Wasser besprüht, um das Formschaumteil in der Kavität zu kühlen, sodass eine stabile Formgebung des Formschaumteils gewährleistet ist.

Herkömmlicherweise wird das Formwerkzeug aus Aluminiumblöcken gefräst, z.B. mit einer CNC Maschine. Mit diesem Verfahren ist jedoch die konstruktive Designfreiheit bei der geometrischen Gestaltung des Formwerkzeugs relativ stark eingeschränkt. Auch präzise bzw. filigrane Details können nur eingeschränkt bzw. aufwändig hergestellt werden. Die Wanddicken des Formwerkzeugs können nicht gleichmäßig dick ausgestaltet werden, wodurch so genannte "Hotspots", also Stellen im Formwerkzeug, an denen im Betrieb besonders hohe Temperaturunterschiede vorherrschen, entstehen können. Dieses führt immer wieder zu Problemen bei der Herstellung der Formschaumteile. Des Weiteren können mit herkömmlichen Verfahren Hinterschnitte nur eingeschränkt bzw. aufwändig hergestellt werden. Die DE19744165 offenbart ein Verfahren zur Herstellung mittels eines Rapid-Prototyping Verfahrens eines Werkzeuges zum Herstellen eines Partikelschaumstoff-Formkörpers. Es ist daher die Aufgabe der vorliegenden Erfindung, ein Verfahren zur Herstellung eines Formwerkzeugs zur Verfügung zu stellen, das die Nachteile des Stands der Technik nicht aufweist und insbesondere eine große konstruktive Designfreiheit bei der geometrischen Gestaltung des Formwerkzeugs sowie die Realisierung von filigranen Details, gleichmäßigen Wanddicken und Hinterschnitten ermöglicht.

### Offenbarung der Erfindung

Diese Aufgabe wird mit dem erfindungsgemäßen Formwerkzeug gemäß Anspruch 1 gelöst. Mit dem beschriebenen Verfahren lassen sich vorteilhaft problemlos nahezu beliebige geometrische Gestaltungen des Formwerkzeugs herstellen. Auch präzise bzw. filigrane Details können umgesetzt werden. Außerdem können mit dem Lasersinterverfahren feinste Strukturen erzeugt werden, wodurch relativ weiche oder harte Oberflächen erzeugt werden können. Durch spezielle Gestaltung der Oberfläche des Formschaumteils können unangenehme Geräusche bei in Kontakt kommenden Reibungsflächen, zum Beispiel Quietschen bei Styroporteilen stark reduziert beziehungsweise in angenehmere Frequenzen geändert werden. Im Folgenden werden unter den Teilen des Formwerkzeugs zum Beispiel Einleger, Schieber usw. verstanden.

Die Wanddicken des Formwerkzeugs sind gleichmäßig ausgestaltet. Dadurch werden Hotspots vermieden und es kommt bei der Verschweißung der Formschaumteile zu einer wesentlich homogeneren Temperaturverteilung an der Kavität. Auch Hinterschnitte im Formwerkzeug können problemlos abgebildet werden, wodurch die Vielfalt an Geometrien bzw. letztlich die Produktvielfalt wesentlich erhöht werden kann.

Das Formwerkzeug weist eine erste Werkzeughälfte und eine zweite Werkzeughälfte auf. Die Werkzeughälften bilden eine Kavität (auch Formhohlraum genannt), wenn die Werkzeughälften, z.B. durch eine Presse und/oder einen Zuhaltemechanismus, zusammengeführt werden. In die Kavität werden die thermoplastischen Schaumstoffpartikel eingeführt. Bei den thermoplastischen Schaumstoffpartikeln kann es sich zum Beispiel um expandiertes Polystyrol (EPS), expandiertes Polypropylen (EPP), expandiertes Polyethylen (EPE), expandiertes, thermoplastisches Polyurethan (E-TPU), Polyethylenterephtalatschäume (PET-Schäume), Schaumstoffe aus (Co)-Polymeren, die sowohl miteinander als auch mit dem Treibmittel wechselwirken etc. handeln. Durch Wärme und Druck werden die Schaumstoffpartikel in der Kavität miteinander verschmolzen. Das Formwerkzeug wird danach abgekühlt und das Formschaumteil kann dem Formwerkzeug entnommen werden.

Das Lasersinterverfahren ist ein generatives Schichtbauverfahren, bei dem das herzustellende Formwerkzeug Schicht für Schicht aus einem pulverförmigen Sinterstoff aufgebaut wird. Im Sinne dieser Erfindung umfasst der Begriff Lasersinterverfahren das selektive Lasersintern (SLS), das so genannte Laserschmelzverfahren und sonstige generative Verfahren. Bei dem Sinterstoff kann es sich zum Beispiel um Polyamid oder einen anderen Kunststoff, einen kunststoffbeschichteten Formsand, ein Metall und/oder eine Keramik oder dergleichen handeln. Das Formwerkzeug kann zum Beispiel in nur einem einzigen Arbeitsgang hergestellt werden. Dadurch kann der Zeitaufwand zur Herstellung des Formwerkzeugs erheblich reduziert werden. Auch die Ausschussmenge kann mit dem Lasersinterverfahren erheblich reduziert werden.

Der pulverförmige Sinterstoff wird mithilfe einer Rakel, Walze und/oder einem Roller vollflächig mit einer Dicke von z.B. 0,001 bis 0,2 mm auf eine Bauplattform aufgebracht. Der Sinterstoff wird von einem Laserscanner in horizontaler Richtung mit Laserstrahlen bestrahlt. Die Bestrahlung des Sinterstoffs erfolgt anhand von Schichtaufbaudaten, die angeben, wie die geometrische Struktur des herzustellenden Formwerkzeugs in den unterschiedlichen horizontalen Schichten ausgebildet ist. Diese Schichtaufbaudaten können zum Beispiel in einem CAD Modell des Formwerkzeugs vorgegeben sein. Die Schichtaufbaudaten können zum Beispiel im Laserscanner gespeichert und/oder an den Laserscanner übertragen werden. Der Laserscanner bestrahlt die horizontal angeordnete Oberfläche des Sinterstoffs in Abhängigkeit der vorgegebenen Schichtaufbaudaten. Die Energie, die vom Laserscanner (im Folgenden auch vereinfacht Laser genannt) zugeführt wird, wird vom Sinterstoff absorbiert und führt zu einem lokal begrenzten Sintern bzw. Verschmelzen der Pulverpartikel. Diejenigen Stellen der Oberfläche, an denen der Sinterstoff verschmolzen werden soll, werden durch den Laserscanner bestrahlt. Die übrigen Stellen werden nicht bestrahlt, so dass dort der pulverförmige Sinterstoff übrig bleibt. Durch diese Bestrahlung wird jeweils eine horizontale Schicht des Formwerkzeugs erzeugt. Nachdem eine erste horizontale Schicht durch Bestrahlung erzeugt worden ist, wird die Bauplattform vertikal nach unten abgefahren. Danach wird neuer pulverförmiger Sinterstoff auf die Bauplattform bzw. auf die erste Schicht gefüllt. Der Sinterstoff wird z.B. durch Anheben einer Pulverplattform oder als Vorrat in einer Rakel zur Verfügung gestellt. Der Laserscanner bestrahlt die Oberfläche des Sinterstoffs in horizontaler Richtung anhand der Schichtaufbaudaten für eine zweite Schicht des Formwerkzeugs. Diese zweite Schicht folgt in vertikaler Richtung über der ersten Schicht, wodurch auch hinterschnittene Konturen erzeugt werden können. Diese schichtweise Bestrahlung wird so lange durchgeführt, bis das Formwerkzeug komplett bzw. vollständig ausgebildet ist.

Als Laser kann zum Beispiel ein CO₂ (Kohlendioxid) Laser, ein Nd:YAG Laser (Neodym dotierter Yttrium-Aluminium-Granatlaser) und/oder ein Faserlaser zum Einsatz kommen. Mit dem Begriff Laser bzw. Laserscanner sind im Sinne der Erfindung alle Bestrahlungseinrichtungen umfasst, die eine ausreichend energiereiche Strahlung hervorbringen können, um den pulverförmigen Sinterstoff zum Verschmelzen zu bringen. Mit dem Begriff Laser bzw. Laserscanner sind im Sinne der Erfindung alle Arten von Energiequellen umfasst, die geeignet sind, den pulverförmigen Sinterstoff zu versintern und/oder zu verschmelzen, wie zum Beispiel Elektronenstrahlquellen, Flächenstrahler mit Masken, etc.

Das herzustellende Formwerkzeug ist derart konfiguriert, dass der Prozess zum Formen des Formschaumteils im Formwerkzeug stattfindet. Hierzu werden zunächst die thermoplastischen Schaumstoffpartikel z.B. mittels Druckluft und/oder Vakuum in die Kavität befördert. Die thermoplastischen Schaumstoffpartikel werden danach erhitzt, zum Beispiel durch die Zuführung von Heißdampf von einer Dampfkammer durch eine Verdüsung im Formwerkzeug in die Kavität. Durch die Erhitzung verschweißen die Schaumstoffpartikel miteinander. Danach wird das Formwerkzeug bzw. das Formschaumteil in der Kavität abgekühlt und das Formschaumteil kann entnommen werden. Es ist vorgesehen, dass Mikrodüsen mit dem Lasersinterverfahren in das Formwerkzeug eingebracht werden. Die Mikrodüsen erfüllen zwei Funktionen: Erstens die Entlüftung der Kavität beim Befüllen mit Schaumstoffpartikeln und zweitens der Zuführung von Heißdampf von der Dampfkammer in die Kavität. Durch diese Mikroverdüsung kann auf Bohrungen und/oder zusätzliche Düsen vorteilhaft verzichtet werden. Des Weiteren kann die Verteilung der Mikrodüsen bereits im CAD Modell geplant und gleichmäßig gestaltet werden. So können auch bei Hinterschnitten oder komplizierten Konturverläufen Mikrodüsen angeordnet werden. Die gleichmäßige Verteilung der Mikrodüsen bewirkt vorteilhaft gleichmäßige Prozessbedingungen in der Kavität.

Die Mikroverdüsung weist zur Formschaumteilseite, das heißt zur Seite des Formwerkzeugs, die zur Kavität hin gerichtet ist, in der das Formschaumteil geformt wird, Mikroöffnungen auf, die einen Durchmesser von 0,1 bis 0,5 mm aufweisen. Durch die Mikroöffnungen wird verhindert, dass bemerkenswerte Abdrücke auf dem Formschaumteil entstehen. Dadurch verbessert sich der optische Eindruck des Formschaumteils erheblich. Außerdem kann ein Verstopfen der Mikroöffnungen bzw. der Mikroverdüsung durch die konische Ausführung der Bohrungen weitgehend verhindert werden. Die Mikrodüsen sind trichterförmig ausgebildet. Insbesondere können sich die Mikrodüsen zur Dampfkammer hin konisch bis auf zu 2 mm Durchmesser erweitern. Dies hat den Vorteil, dass der Dampf in ausreichender Menge und mit geringem Druckverlust an die Öffnungen zum Formschaumteil hin geführt werden kann. In einer beispielhaften Ausführungsform können sich die Mikrodüsen zur Dampfkammer hin konisch bis auf etwa 2 mm Durchmesser erweitern. Weiterhin kann es beispielhaft vorgesehen dass zur Dampfkammer hin die Mikrodüsen durch einen Übergang, der mit einem Radius versehen ist, enden. Durch diesen Radius ist es möglich, ein Abreißen der Strömung des Dampfes zu verhindern, wodurch sich das Strömungsverhalten des Dampfes und damit die Wärmezufuhr zum Formschaumteil erheblich verbessert.

Gemäß einer anderen beispielhaften Ausführungsform ist es vorgesehen, dass Kühlmittelleitungen mit dem Lasersinterverfahren in das Formwerkzeug eingebracht werden, wobei die Kühlmittelleitungen zur Abkühlung des Formschaumteils in der Kavität konfiguriert sind. Durch die Kühlmittelleitungen kann das Abkühlen des Formschaumteils erheblich beschleunigt werden. Dadurch kann der Energieeinsatz verringert und die Zykluszeiten verkürzt werden. Es kann beispielhaft vorgesehen sein, dass die Kühlmittelleitungen nur wenige Millimeter, zum Beispiel weniger als 5 mm, unter der Werkzeugwand bzw. der Oberfläche des Formwerkzeugs, die der Kavität zugewandt ist, angeordnet sind. Das in den Kühlmittelleitungen flüssige Kältemittel tritt zum Beispiel in einen offenporigen definierten Strukturraum, den so genannten Expansionsraum, aus und verdampft augenblicklich durch die schlagartige Volumenänderung direkt hinter der Werkzeugwand. Abhängig vom eingesetzten Kältemittel kann die Werkzeugwand innerhalb von wenigen Sekunden auf bis zu -30 °C abgekühlt werden. Durch diese extreme Energieaufnahme, die im Vergleich zu Wasser um bis zu Faktor 20 höher sein kann, erstarrt das Formschaumteil in kürzester Zeit. Im Idealfall sind zum Beispiel Abkühlraten von bis zu 80 K/s möglich. Die im Vergleich zu konventioneller Kühlung mehr als doppelt so hohen Kühlraten halbieren die Taktzeiten bzw. Zykluszeiten. Außerdem entsteht durch die schnelle Abkühlung eine relativ feste Haut auf dem Formschaumteil, wodurch das Formschaumteil eine höhere Festigkeit erhält und optisch aufgewertet wird. Außerdem kann beispielhaft das Kühlsystem bzw. können die Kühlmittelleitungen vom Verdüsungssystem bzw. von der Verdüsung getrennt sein. Dadurch ist es vorteilhaft möglich, zu verhindern, dass Kühlmittel an das Produkt bzw. Formschaumteil gelangt. Es kann als Kühlmittel Wasser verwendet, wodurch das Kühlwasser in einem geschlossenen Kreislauf zugleich zur Dampferzeugung verwendet werden kann. Dadurch lassen sich der Wasserverbrauch und die Energiekosten deutlich reduzieren. Ein Besprühen mit Wasser ist vorteilhaft nicht mehr notwendig, wodurch die Haltbarkeit des Formteilautomaten erhöht und die Bedingungen des Arbeitsplatzes verbessert werden können.

Gemäß einer anderen beispielhaften Ausführungsform der vorliegenden Erfindung werden Mikrokapillarkanäle mit dem Lasersinterverfahren unter der Oberfläche des Formwerkzeugs angeordnet, wobei die Mikrokapillarkanäle zur Abführung von Kondensat konfiguriert sind. Das Kondensat entsteht bei der Einbringung von heißem Dampf in das kältere Formwerkzeug bzw. in die Kavität. Durch die Mikrokapillarkanäle kann das Kondensat abgeführt werden. Dadurch wird verhindert, dass das Kondensat in den Zwischenräumen der Schaumstoffpartikel eingeschlossen wird und an der Oberfläche sogenannte Zwickelräume bzw. Zwickel bildet, die ästhetisch unschön aussehen und zu einer qualitativen Abwertung des Formschaumteils führen können, weil sich darin Verunreinigungen ansammeln können. Die Mikrokapillarkanäle können das Kondensat durch den Kapillareffekt kontrolliert abführen, was zur Verminderung der Zwickelbildung am Formschaumteil führt. Alternativ oder zusätzlich kann mit dem Lasersinterverfahren eine mikroporöse Oberfläche im Formwerkzeug erzeugt werden. Dabei wird z.B. durch gegenläufig angeordnete feine Linien eine netzförmige Struktur erzeugt, die z.B. 0,05 bis 0,5 mm dick sein kann.

Gemäß einer anderen beispielhaften Ausführungsform wird das Formwerkzeug mit dem Lasersinterverfahren aus einem pulverförmigen Metallmaterial und/oder einem leitfähigen Kunststoff gefertigt. Durch die elektrische Leitfähigkeit des Metallmaterials bzw. des Kunststoffs ist es vorteilhaft möglich, das Formwerkzeug induktiv zu erhitzen. Dadurch ist eine schnelle und effiziente Erwärmung des Formwerkzeugs möglich. Durch die schnellere Erwärmung des Formwerkzeugs kann die Kondensatbildung auf der Kavität stark vermindert werden, die entsteht, wenn bei der Bedampfungsphase der heiße Dampf auf das abgekühlte Formwerkzeug trifft. Durch die verringerte Kondensatbildung kann weiterhin die Zwickelbildung reduziert werden, was die Oberflächengüte des Formschaumteils deutlich erhöht. Außerdem kann beim induktiven Erhitzen meistens auf ein anschließendes Tempern in einem Temperofen verzichtet werden, wodurch die Fertigungskosten und der Fertigungsaufwand erheblich reduziert werden kann. Bei dem Metallmaterial kann es sich zum Beispiel um ein Eisenmaterial und/oder Nickelmaterial handeln, es können aber auch andere Metalle verwendet werden.

Gemäß einer beispielhaften Ausführungsform ist vorgesehen, dass das Formwerkzeug aus einem Metallmaterial gefertigt ist. Dazu wird auf die obigen Ausführungen zum Metallmaterial bzw. induktiven Erhitzen verwiesen.

Weiterhin ist es gemäß einer anderen beispielhaften Ausführungsform möglich, dass das Formwerkzeug durch die Induktionsheizeinrichtung deutlich über die üblicherweise notwendigen Temperaturen erhitzt wird, so dass es zur direkten Schmelze an der Oberfläche der eingebrachten Schaumstoffpartikel kommt. Dadurch verdichtet sich an der Oberfläche des Formschaumteils die Schaumstruktur und es entsteht eine höhere Rand-Schaumdichte, die bis zur vollständigen Plastifizierung gehen kann. Dieser so genannte "Skineffekt" hat den Vorteil, dass das Formschaumteil verhautet wird, wodurch es erheblich aufgewertet wird. Formschaumteile mit einer außen geschlossenen Oberfläche und einer Zellstruktur im Kern nennt man Integralschaum.

Diese verdichtete Oberfläche des Formschaumteils kann zum Beispiel auf beiden Seiten des Formschaumteils erzeugt werden, d.h. auf der Oberseite und der Unterseite des Formschaumteils. Durch diese beidseitig erzeugbare Haut, deren Dicke über die Temperatur des Formwerkzeugs einstellbar ist, wird durch einen "Sandwicheffekt" die Festigkeit des Formschaumteils deutlich erhöht. Die erzielte zusätzliche Festigkeit kann auch dazu benutzt werden, die Rohdichte der Schaumstoffpartikel zu reduzieren. Des Weiteren kann durch die erreichbare Glätte der Oberfläche eine erhebliche verbesserte Hygienesituation geschaffen werden. Bakterien können nicht mehr in die Zwickelräume der Partikel einziehen und die Formschaumteile lassen sich nach Gebrauch besser reinigen. Diese Vorteile eröffnen ganz neue Anwendungsgebiete, vor allem in der Lebensmittelindustrie.

Ausführungsbeispiele der vorliegenden Erfindung sind in den Zeichnungen dargestellt und in der nachfolgenden Beschreibung näher erläutert.

Kurze Beschreibung der Zeichnungen

### Es zeigen schematisch

**Figur 1** eine Darstellung eines Verfahrens zur Herstellung des erfindungsgemässen Formwerkzeuges und
**Figur 2** einen Formteilautomat

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

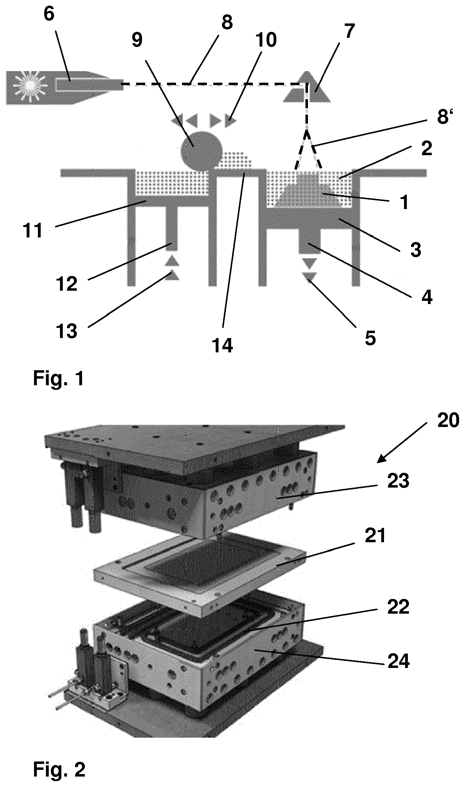

Figur 1 zeigt schematisch eine Darstellung eines Verfahrens zur Herstellung des erfindungsgemässen Formwerkzeuges. Das Verfahren dient der Herstellung eines Formwerkzeugs 1, wobei das Formwerkzeug 1 derart konfiguriert ist, dass das Formwerkzeug 1 eine Kavität (nicht dargestellt) bildet und in der Kavität ein Formschaumteil aus thermoplastischen Schaumstoffpartikeln geformt wird, wobei das Formwerkzeug 1 mit einem Lasersinterverfahren hergestellt wird. Das Lasersinterverfahren ist ein generatives Schichtbauverfahren, bei dem das herzustellende Formwerkzeug 1 Schicht für Schicht aus einem pulverförmigen Sinterstoff 2 aufgebaut wird.

Zur Herstellung des Formwerkzeugs 1 wird der pulverförmige Sinterstoff 2 auf eine Bauplattform 3 gefüllt. Die Bauplattform 3 weist als Boden einen Kolben 4 auf, der mit jeder neuen Schicht vertikal nach unten in Richtung des Pfeils 5 abfährt. Eine Laserlichtquelle 6 sendet Laserstrahlen 8 aus, die von einem Laserscanner 7 auf die Oberfläche des Sinterstoffs 2 gerichtet werden. Die Laserstrahlen 8' treffen auf die Oberfläche des Sinterstoffs 2. Der Scanner 7 bestrahlt die Oberfläche des Sinterstoffs 2 in horizontaler Richtung derart, dass der Sinterstoff 2 versintert wird, um die Schicht des Formwerkzeugs 1 zu erhalten. Im Scanner 7 sind dementsprechend Schichtaufbaudaten gespeichert, die das Formwerkzeug1 in seinem schichtweisen Aufbau beschreiben, so dass der Scanner 7 diejenigen Teile der Oberfläche des Sinterstoffs 2 bestrahlt, die zum Bilden des Formwerkzeugs 1 benötigt werden. Nicht versinterter Sinterstoff 2 wird nach der Herstellung des Formwerkzeugs 1 einfach entfernt.

Damit das Formwerkzeug schichtweise bzw. Schicht für Schicht aufgebaut werden kann, wird der Kolben 4 der Bauplattform 3 nach jeder bestrahlten bzw. gesinterten horizontalen Schicht vertikal nach unten in Pfeilrichtung 5 bewegt. Nach jeder gescannten Schicht wird neuer Sinterstoff 2 auf die Bauplattform 3 gefüllt, so dass die nächste Oberfläche des Sinterstoffs 2 bestrahlt werden kann. In diesem Ausführungsbeispiel wird dieser Sinterstoffnachschub mit einem Roller 9 nachgefüllt. Der Roller 9 bewegt sich in horizontaler Richtung über eine Verbindungsfläche 14 nach rechts oder nach links bzw. in Richtung der Bauplattform 3 oder von der Bauplattform 3 weg. Die Bewegungsrichtungen des Rollers 3 sind mit den Pfeilen 10 angedeutet. Der Roller 9 schiebt neuen Sinterstoff 2 von einem Vorratsbehälter 11 zur Bauplattform 3. Der Vorratsbehälter 11 weist als Boden einen weiteren Kolben 12 auf, der in vertikaler Richtung nach oben bewegt werden kann. Die Bewegungsrichtung des weiteren Kolbens 12 des Vorratsbehälters 11 ist mit den Pfeilen 13 angedeutet. Nach jeder gescannten bzw. bestrahlten Schicht des Formwerkzeugs 1 rollt der Roller 9 neuen Sinterstoff 2 vom Vorratsbehälter 11 auf die Bauplattform 3. Bevor der Roller 9 für die nächste Schicht neuen Sinterstoff 2 zuführen kann, wird der Kolben 12 des Vorratsbehälters 11 vertikal nach oben verfahren, so dass der Roller 9 wieder neuen Sinterstoff 2 zur Bauplattform 3 bewegen kann.

In diesem Verfahren läuft die Herstellung des Formwerkzeugs 1 wie folgt ab. Der Kolben 4 der Bauplattform 3 befindet sich in der vertikal obersten Stellung. Auf die Bauplattform 3 wird Sinterstoff 2 gefüllt. Der Scanner 7 bestrahlt die Oberfläche des Sinterstoffs 2 gemäß den gespeicherten schichtweisen Aufbaudaten des Formwerkzeugs 1. Durch die Bestrahlung wird der bestrahlte Sinterstoff 2 versintert, indem die Pulverpartikel des Sinterstoffs 2 aufgeschmolzen werden. Nach dieser ersten Schicht fährt der Kolben 4 der Bauplattform 3 ein Stück nach unten. Der Roller 9 schiebt neuen Sinterstoff 2 auf die Bauplattform 3. Dazu verfährt der Kolben 12 des Vorratsbehälters 11 ein Stück nach oben, so dass der Roller 9 neuen Sinterstoff 2 zur Bauplattform 3 schieben kann. Nachdem die Bauplattform 3 wieder mit neuem Sinterstoff 2 aufgefüllt ist, kann der Laserscanner 7 die nächste bzw. die zweite Schicht des Formwerkzeugs 1 scannen bzw. versintern. Wenn diese zweite Schicht fertiggestellt ist, verfährt der Kolben 4 der Bauplattform 3 wieder ein weiteres Stück nach unten. Nachdem der Kolben 12 des Vorratsbehälters 11 wieder ein weiteres Stück nach oben verfahren worden ist, schiebt der Roller 9 wieder neuen Sinterstoff 2 auf die Bauplattform 3. Danach kann die nächste bzw. dritte Schicht des Formwerkzeugs 1 gescannt bzw. gesintert werden und das Verfahren geht so lange weiter bis das Formwerkzeug 1 letztendlich fertig gestellt ist. Der überschüssige Sinterstoff 2 kann nun vom Formwerkzeug 1 entfernt werden, zum Beispiel mit Druckluft, und das Formwerkzeug 1 kann der Bauplattform 3 entnommen werden.

Figur 2 zeigt schematisch einen Formteilautomat 20 gemäß einer beispielhaften Ausführungsform der vorliegenden Erfindung. Figur 2 zeigt den Formteilautomat 20 in einer Explosionsdarstellung. Im Folgenden werden nur die für die Beschreibung dieser Ausführungsform wesentlichen Bestandteile des Formteilautomaten dargestellt; die übrigen Bestandteile, wie zum Beispiel Medienanschlüsse, Zuhaltemechanismus usw. sind dem Fachmann bekannt und werden daher hier nicht beschrieben. Der Formteilautomat 20 weist ein Formwerkzeug 21 auf. Das Formwerkzeug 21 weist eine untere Hälfte 21 und eine nicht dargestellte obere Hälfte auf. In der Figur 2 ist aus Gründen der übersichtlicheren Darstellung nur die untere Hälfte des Formwerkzeugs 21 dargestellt. Die obere Hälfte des Formwerkzeugs 21 befindet sich in einem oberen Gehäuseteil 23. Der Formteilautomat 20 weist weiterhin ein unteres Gehäuseteil 24 auf. Im unteren Gehäuseteil 24 sind Induktionsspulen 22 angeordnet. Ebenso sind im oberen Gehäuseteil 23 nicht dargestellte Induktionsspulen angeordnet. Im zusammengebauten Zustand des Formteilautomaten ist die untere Hälfte des Formwerkzeugs 21 über den Induktionsspulen 22 im unteren Gehäuseteil 24 angeordnet.

Das Formwerkzeug 21 bzw. die untere Hälfte des Formwerkzeugs 21 und die obere Hälfte des Formwerkzeugs 21 bilden eine Kavität, in der ein Formschaumteil aus thermoplastischen Schaumstoffpartikeln geformt wird. Das Formwerkzeug 21 ist mit einem Lasersinterverfahren hergestellt worden. In dieser Ausführungsform ist das Formwerkzeug 21 aus einem Metallmaterial gefertigt. Der Formteilautomat 20 weist weiterhin einen Zuhaltemechanismus auf, der das Formwerkzeug 21 schließt und öffnet, d.h. der Zuhaltemechanismus führt die obere Hälfte und die untere Hälfte des Formwerkzeugs 21 derart zusammen bzw. auseinander, so dass die Kavität gebildet bzw. geöffnet werden kann.

Die Induktionsspulen 22 dienen zum Erwärmen des Formwerkzeugs 21. Die Induktionsspulen 22 werden mit einem Wechselstrom durchflossen und erzeugen dadurch Wärme im Inneren des Formwerkzeugs 21. Die Funktionsweise des Formteilautomaten 20 ist wie folgt. In der Ausgangssituation ist die Kavität geöffnet, d.h. die Hälften des Formwerkzeugs 21 sind voneinander entfernt. Danach führt der Zuhaltemechanismus die Hälften des Formwerkzeugs 21 zusammen und die Schaumstoffpartikel werden in die Kavität eingefüllt. Danach wird Wechselstrom durch die Induktionsspulen 22 geleitet, so dass das Formwerkzeug 21 induktiv erwärmt wird. Diese Erwärmung führt zum teilweise verschmelzen der Schaumstoffpartikel, so dass das Formschaumteil geformt werden kann. Zusätzlich kann noch Druck aufgebracht werden, um das Formschaumteil zu formen. Nach dem Formen des Formschaumteils wird das Formwerkzeug 21 abgekühlt. Nach dem Abkühlen kann die Kavität geöffnet werden und das Formschaumteil kann entnommen werden. Darauf folgend kann ein weiteres Formschaumteil geformt werden, indem dieser Prozess erneut durchlaufen wird.

Die oben aufgeführten Ausführungsbeispiele dienen lediglich der Illustration der vorliegenden Erfindung und sollen den Gegenstand der Erfindung in keiner Weise einschränken.

### Bezugszeichenliste

- 1: Formwerkzeug
- 2: pulverförmiger Sinterstoff
- 3: Bauplattform
- 4: Kolben
- 5: Pfeil
- 6: Laserlichtquelle
- 7: Laserscanner
- 8: Laserstrahlen
- 8': Laserstrahlen
- 9: Roller
- 10: Pfeil
- 11: Vorratsbehälter
- 12: Kolben
- 13: Pfeil
- 14: Verbindungsfläche
- 20: Formteilautomat
- 21: Formwerkzeug
- 22: Induktionsspule
- 23: Gehäuseteil
- 24: Gehäuseteil

## Patentansprüche

1. Formwerkzeug (1, 21) zur Herstellung eines Formteiles auf Basis von expandierbaren Schaumstoffpartikeln, umfassend eine erste Werkzeughälfte und eine zweite Werkzeughälfte, die eine Kavität bilden, in die die thermoplastischen Schaumstoffpartikel einführbar sind und mittels aus einer Dampfkammer zuführbarem Heißdampf verschmelzbar sind, wobei das Formwerkzeug aus einem pulverförmigen Metall oder Kunststoffmaterial mittels Lasersintern hergestellt ist, **dadurch gekennzeichnet, dass** die Wanddicken des Formwerkzeuges (1,21) gleichmäßig ausgestaltet sind und Mikrodüsen mittels Lasersintern in das Formwerkzeug (1, 21) eingebracht sind, mittels derer die Kavität beim Befüllen entlüftbar und nachfolgend Heißdampf in die Kavität zuführbar ist und die Mikrodüsen zur Kavität hin Mikroöffnungen mit einem Durchmesser von 0,1 bis 0,5 mm aufweisen und trichterförmig ausgebildet sind.

2. Formwerkzeug (1, 21) nach Anspruch 1, **dadurch gekennzeichnet, dass** die Mikrodüsen sich zur Dampfkammer hin konisch auf bis zu 2 mm erweitern.

3. Formwerkzeug (1, 21) nach Anspruch 1 oder 2, **dadurch gekennzeichnet, dass** die Mikrodüsen zur Dampfkammer hin durch einen Übergang, der mit einem Radius versehen ist, enden.

4. Formwerkzeug (1, 21) nach einem der Ansprüche 1 bis 3, **dadurch gekennzeichnet, dass** die Mikrodüsen gleichmäßig verteilt angeordnet sind.

5. Formwerkzeug (1, 21) nach einem der Ansprüche 1 bis 4, **dadurch gekennzeichnet, dass** Kühlmittelleitungen mittels Lasersintern in das Formwerkzeug (1, 21) eingebracht sind.

6. Formwerkzeug (1, 21) nach einem der Ansprüche 1 bis 5, **dadurch gekennzeichnet, dass** Mikrokapillarkanäle mittels Lasersintern unter der an die Kavität angrenzenden Oberfläche des Formwerkzeuges angeordnet sind, mittels derer Kondensat abführbar ist.

7. Formwerkzeug (1, 21) nach einem der Ansprüche 1 bis 6, **dadurch gekennzeichnet, dass** das Formwerkzeug mittels Lasersintern mit einer mikroporösen Oberfläche ausgebildet ist.

8. Formwerkzeug (1, 21) nach Anspruch 7, **dadurch gekennzeichnet, dass** die mikroporöse Oberfläche aus einer netzförmigen Struktur gegenläufiger Linien auf der Oberfläche des Formwerkzeuges (1, 21) gebildet ist.

9. Formwerkzeug (1, 21) nach Anspruch 8, **dadurch gekennzeichnet, dass** die Linien eine Dicke von 0,05 bis 0,5 mm aufweisen.

10. Formwerkzeug (1, 21) nach einem der Ansprüche 1 bis 9, **dadurch gekennzeichnet, dass** es aus einem elektrisch leitfähigen Material hergestellt ist und eine Induktionsheizeinrichtung (22) aufweist, die derart konfiguriert ist, dass die Induktionsheizeinrichtung (22) das Formwerkzeug (1, 21) induktiv erwärmt.

## Claims

1. Moulding tool (1, 21) for producing a moulded part on the basis of expandable foam particles, comprising a first tool half and a second tool half which form a cavity into which the thermoplastic foam particles can be introduced and can be melted by means of hot steam that can be supplied from a steam chamber, wherein the moulding tool is produced from a powdered metal or plastic material by means of laser sintering, **characterised in that** the wall thicknesses of the moulding tool (1, 21) are designed uniformly and micro nozzles are introduced into the moulded tool (1, 21) by means of laser sintering by means of which the cavity can be vented when being filled and hot steam can subsequently be supplied to the cavity and the micro nozzles comprise micro openings with a diameter of 0.1 to 0.5 mm towards the cavity and are designed in a funnel shape.

2. Moulding tool (1, 21) according to claim 1, **characterised in that** the micro nozzles expand conically up to 2 mm towards the steam chamber.

3. Moulding tool (1, 21) according to claim 1 or 2, **characterised in that** the micro nozzles end through a transition, provided with a radius, towards the steam chamber.

4. Moulding tool (1, 21) according to any one of claims 1 to 3, **characterised in that** the micro nozzles are arranged in a uniformly distributed manner.

5. Moulding tool (1, 21) according to any one of claims 1 to 4, **characterised in that** the coolant lines are introduced into the moulding tool (1, 21) by means of laser sintering.

6. Moulding tool (1, 21) according to any one of claims 1 to 5, **characterised in that** micro capillary channels are arranged under the surface of the moulding tool bordering the cavity by means of which condensate can be discharged.

7. Moulding tool (1, 21) according to any one of claims 1 to 6, **characterised in that** the moulding tool is designed with a microporous surface by means of laser sintering.

8. Moulding tool (1, 21) according to claim 7, **characterised in that** the microporous surface is formed from a mesh-like structure of opposing lines on the surface of the moulding tool (1, 21).

9. Moulding tool (1, 21) according to claim 8, **characterised in that** the lines have a thickness of 0.05 to 0.5 mm.

10. Moulding tool (1, 21) according to any one of claims 1 to 9, **characterised in that** it is produced from an electrically-conductive material and comprises an induction heating device (22) which is configured such that the induction heating device (22) inductively heats the moulding tool (1, 21).

## Revendications

1. Outil de formage (1, 21) pour la fabrication d'une pièce à base de particules de mousse expansible, comprenant une première moitié d'outil et une seconde moitié d'outil, qui forment une cavité dans laquelle les particules de mousse thermoplastique peuvent être introduites et fondues au moyen de vapeur surchauffée issue d'une chambre de vaporisation, dans lequel l'outil de formage est formé d'un métal ou d'une matière plastique en poudre par frittage au laser, **caractérisé en ce que** les épaisseurs de paroi de l'outil de formage (1, 21) sont agencées de manière uniforme et des microbuses sont ménagées dans l'outil de formage (1, 21) par frittage au laser, au moyen desquelles la cavité peut être ventilée lors du remplissage et de la vapeur surchauffée peut être ensuite acheminée dans la cavité et les microbuses débouchant sur la cavité présentent des micro-ouvertures d'un diamètre de 0,1 à 0,5 mm et se présentent en forme d'entonnoirs.

2. Outil de formage (1, 21) selon la revendication 1, **caractérisé en ce que** les microbuses s'évasent vers la chambre de vaporisation en forme conique jusqu'à 2 mm.

3. Outil de formage (1, 21) selon la revendication 1 ou 2, **caractérisé en ce que** les microbuses débouchant sur la chambre de vaporisation se terminent par une transition qui est pourvue d'un rayon.

4. Outil de formage (1, 21) selon l'une quelconque des revendications 1 à 3, **caractérisé en ce que** les microbuses sont agencées distribuées de manière uniforme.

5. Outil de formage (1, 21) selon l'une quelconque des revendications 1 à 4, **caractérisé en ce que** des conduits d'agent réfrigérant sont ménagés dans l'outil de formage (1, 21) par frittage au laser.

6. Outil de formage (1, 21) selon l'une quelconque des revendications 1 à 5, **caractérisé en ce que** des canaux microcapillaires sont agencés par frittage au laser en dessous de la surface de l'outil de formage délimitant la cavité, au moyen desquels canaux un condensat peut être évacué.

7. Outil de formage (1, 21) selon l'une quelconque des revendications 1 à 6, **caractérisé en ce que** l'outil de formage est formé avec une surface microporeuse par frittage au laser.

8. Outil de formage (1, 21) selon la revendication 7, **caractérisé en ce que** la surface microporeuse est formée d'une structure réticulaire de lignes opposées sur la surface de l'outil de formage (1, 21).

9. Outil de formage (1, 21) selon la revendication 8, **caractérisé en ce que** les lignes présentent une épaisseur de 0,05 à 0,5 mm.

10. Outil de formage (1, 21) selon l'une quelconque des revendications 1 à 9, **caractérisé en ce qu'**il est fabriqué d'un matériau électroconducteur et présente un dispositif de chauffage par induction (22) qui est configuré en sorte que le dispositif de chauffage par induction (22) chauffe l'outil de formage (1, 21) par induction.
